# EUROPÄISCHE PATENTSCHRIFT

(11) **EP 4 630 889 B1**
(45) Veröffentlichungstag und Bekanntmachung des Hinweises auf die Patenterteilung: **15.04.2026**
(21) Anmeldenummer: 24701715.5
(22) Anmeldetag: 29.01.2024
(51) Int. Cl.: G05B 19/042, G05B 19/05

(54) **STEUERSYSTEM, STEUERGERÄT UND VERFAHREN ZUR BEREITSTELLUNG EINES STEUER- UND/ODER REGELSIGNALS**
CONTROL SYSTEM, CONTROL DEVICE AND METHOD FOR PROVIDING A OPEN- AND/OR CLOSED-LOOP CONTROL SIGNAL
SYSTÈME DE COMMANDE, DISPOSITIF ET PROCÉDÉ DE COMMANDE POUR FOURNIR UN SIGNAL DE COMMANDE EN BOUCLE OUVERTE ET/OU FERMÉE

(30) Priorität: 31.01.2023 LU 503412
(43) Veröffentlichungstag der Anmeldung: 15.10.2025
(73) Patentinhaber: Elmos Semiconductor SE, 51379 Leverkusen (DE)
(72) Erfinder: ARNOLD, Rüdiger, 10405 Berlin (DE); CWIKLINSKI, Michal, 14612 Falkensee (DE); BROSE, Felix, 13053 Berlin (DE); PYKA, Robert, 44227 Dortmund (DE)
(74) Vertreter: Pearl Cohen EU
(86) Internationale Anmeldenummer: PCT/EP2024/052073
(87) Internationale Veröffentlichungsnummer: WO 2024/160729

(56) Entgegenhaltungen:
- CN-A- 104 570 811
- CN-A- 107 703 805
- DE-A1- 102017 108 219
- US-A1- 2004 230 945
- US-A1- 2014 372 069
- US-A1- 2021 135 942
- US-A1- 2022 028 713
- US-A1- 2022 334 988
- US-B2- 10 108 168

## Beschreibung

Bereitgestellt werden ein Steuersystem, ein Steuergerät, eine Verwendung eines RISC-Prozessors als Messcontroller in einem Steuersystem, und ein Verfahren zur Bereitstellung eines Steuer- und/oder Regelsignals. Die Ausführungsformen liegen somit insbesondere auf dem Gebiet der Steuersysteme und Steuergeräte, insbesondere für den Automotive-Bereich.

Steuersystem können komplex integrierte Messsysteme zur Erfassung von Messsignalen und Erstellung von Ausgabedaten aufweisen. Die Elaboration und die Steuerung der Messstrecke wird dabei herkömmlicherweise von Mikrocontrollern übernommen. Neben der Elaboration der Messdaten und der Steuerung der Messstrecke hat der Mikrocontroller herkömmlicherweise auch die Steuerung der Systemfunktionen inne. Die Vielzahl von Funktionen, welche vom Mikrocontroller auszuführen sind, führen oftmals zu Geschwindigkeitseinbußen des Mikrocontrollers und erschweren zudem eine Gewährleistung der funktionalen Sicherheit. Daher stoßen herkömmliche Mikrocontroller bei der Ausführung von Messfunktionen und Steuerfunktionen neben der Systemsteuerung oft an ihre Grenzen.

Die US 10,108,168 B2 beschreibt Überwachungsnetzwerk und ein computerausführbares Verfahren zur automatisierten Überwachung eines Kontrollsystems.

Die US 2022/0028719 A1 beschreibt ein Verfahren zur Bestimmung, ob eine Anpassung eines Herstellungsverfahrensrezepts bereitgestellt ist.

Die US 2022/0334988 A1 beschreibt eine Input/Output Station für ein Feldbussystem mit einem Feldbuskoppler, der ein Systembusinterface und ein Feldbusinterface aufweist.

Die US 2021/0135942A1 beschreibt Verfahren zur automatischen Konfiguration eine Rechenvorrichtung in einer Computerumgebung.

Vor dem Hintergrund dieses Standes der Technik besteht die Aufgabe der vorliegenden Offenbarung darin, eine verbesserte Bedieneinheit anzugeben, welche geeignet ist, den Stand der Technik zu bereichern. Eine konkrete Ausgestaltung der Offenbarung kann die Aufgabe lösen, die Gewährleistung der funktionalen Sicherheit zu vereinfachen und eine Geschwindigkeit des Steuersystems zu erhöhen.

Gelöst wird die Aufgabe durch die Merkmale der jeweiligen unabhängigen Ansprüche. Die Unteransprüche haben optionale Weiterbildungen der Erfindung zum Inhalt.

In einem ersten Aspekt wird ein Steuersystem gemäß Patentanspruch 1 bereitgestellt.

Es wird die Verwendung eines RISC-Prozessors als Messcontroller in einem Steuersystem bereitgestellt.

Weiterhin wird ein Steuergerät für ein Kraftfahrzeug bereitgestellt, welches ein offenbarungsgemäßes Steuersystem umfasst.

In einem weiteren Aspekt wird ein Verfahren zur Bereitstellung eines Steuer- und/oder Regelsignals gemäß Patentanspruch 15 bereitgestellt.

Ein Steuersystem ist dabei ein System zur Steuerung und/oder Regelung eines damit verbunden Systems bzw. eines Regelkreises. Das Steuersystem kann mehrere Komponenten umfassen, wie insbesondere den Systemcontroller und einen oder mehrere Messcontroller. Die mehreren Komponenten können als eine zusammenhängende Anordnung vorliegen und optional zusammen auf einer Platine und/oder in einem Gehäuse untergebracht sein. Alternativ können mehrere Komponenten des Steuersystems separat voneinander vorliegen.

Steuer- und/oder Regelsignale sind dabei solche Signale, welche von dem Steuersystem bereitgestellt werden, um eine damit verbundene Messstrecke zu steuern und/oder einen Regelkreis zu steuern. Das Steuern und/oder Regeln kann dabei das Erfassen von Messignalen, die Elaboration der Messignale und die Steuerung einer Messstrecke umfassen.

Der Begriff "BUS" bzw. "Bus" gemäß der vorliegenden Offenbarung ist dabei im Sinne der allgemeingebräuchlichen Abkürzung für den englischen Begriff "Binary Unit System" zu verstehen. Entsprechend ist ein Bus ein System zur Datenübertragung zwischen mehreren Teilnehmern über einen gemeinsamen Übertragungsweg. Unter einem "Systembus" ist daher ein System zur Datenübertragung zwischen mehreren Teilnehmern zu verstehen, welche zumindest teilweise in die Ausführung von Systemfunktionen involviert sind. Der Systemcontroller ist dabei einer der Teilnehmer des Systembusses. Als Messbus ist dabei ein System zur Datenübertragung zwischen mehreren Teilnehmern zu verstehen, welche zumindest teilweise in die Ausführung von Messfunktionen und/oder Ausgabefunktionen involviert sind. Der Messcontroller ist dabei einer der Teilnehmer des Messbusses. Der Systembus und der Messbus sind dabei separat voneinander ausgebildet, also jeweils als eigenständiger Bus. Der Systembus und der Messbus sind über die Busschnittstelle miteinander verbunden, sodass eine Kommunikation zwischen Teilnehmern des Systembusses und des Messbusses erfolgen kann. Die Kommunikation und/oder ein Austausch von Daten können dabei auf bestimmte Arten von Daten und/oder Informationen, auf eine bestimmte Richtung des Informationsflusses, auf bestimmte Teilnehmer und/oder auf bestimmte Zeiträume beschränkt sein.

Eine Systemfunktion ist dabei eine Funktion, welche zur Systemsteuerung des Steuersystems dient. Eine Systemfunktion kann demnach einen Teil eines Betriebssystems des Steuersystems bilden und der grundlegenden Funktion der Systemfunktion dienen. Das Betriebssystem kann dabei mehrere Systemfunktionen umfassen, die zusammen mit den Hardwareeigenschaften des Steuersystems die Basis zum Betrieb des Steuersystems bildet und insbesondere die Abarbeitung von Programmen und spezifischeren Funktionen steuert und überwacht. Die Systemfunktionen werden dabei durch den Systemcontroller ausgeführt. Der Systemcontroller kann einen Mikrocontroller aufweisen oder als solcher ausgebildet sein.

Eine Messfunktion ist dabei eine Funktion, welche einer vorbestimmten Messung dient. Dabei können einzelne oder verschiedene Messfunktionen das Erfassen von Messdaten und/oder das Aufbereiten von Messdaten betreffen. Die Messfunktionen werden dabei von einem Messcontroller ausgeführt. Ein Messcontroller kann dazu ausgelegt sein, eine oder mehrere Messfunktionen auszuführen. Das Erfassen von Messdaten kann dabei ein Auslesen von Sensordaten aus einem oder mehreren am Messbus teilnehmenden Sensoren umfassen. Die Aufbereitung von Messdaten kann dabei ein Verbessern einer Qualität der Messdaten beinhalten, wie etwa ein Filtern und/oder ein Verstärken und/oder ein Anwenden einer Rauschunterdrückung auf die Messdaten.

Eine Ausgabefunktion ist dabei eine Funktion, welche der Anpassung von Steuer- und/oder Regelsignalen dient und/oder der Ausgabe von Steuer- und/oder Regelsignalen, etwa an den Regelkreis und/oder an einen Aktor, dient. Ein Messcontroller kann dabei dazu ausgelegt sein, eine oder mehrere Ausgabefunktionen und optional eine oder mehrere Messfunktionen auszuführen. Ein Anpassen der Steuer- und/oder Regelsignale kann dabei ein Abändern von vorgegebenen Steuer- und/oder Regelsignale umfassen, etwa anhand von Anweisungen, welche durch den Systemcontroller bereitgestellt werden, und/oder anhand von Informationen, die durch den Messcontroller selbst oder einen anderen Messcontroller ermittelt werden. Die Ausgabe von Steuer- und/oder Regelsignalen kann dabei ein Bereitstellen der Steuer- und/oder Regelsignale an einen Aktor bzw. an eine Messstrecke bzw. an einen Regelkreis im Allgemeinen darstellen.

Ein integrierter Schaltkreis kann dabei ein elektronisches Bauteil darstellen, in welches alle Komponenten des integrierten Schaltkreises integriert sind. Der integrierte Schaltkreis kann optional in monolithischer Form bereitgestellt werden und/oder auf einer gemeinsamen Platine angeordnet sein. Der integrierte Schaltkreis kann optional das Steuersystem als "System-on-a-Chip" bereitstellen, also das Steuersystem mit allen zugehörigen Komponenten in Form eines elektronischen Chips und optional in Form eines Halbleiterchips bereitstellen.

Dass der mindestens eine Messcontroller als eine Finite-State-Machine ausgebildet sein kann, bedeutet dabei, dass sich der mindestens eine Messcontroller ausschließlich in einem von einer begrenzten Anzahl möglicher Zustände befinden kann. Dass es sich dabei um eine deterministische Finite-State-Machine handeln kann, bedeutet, dass die Finite-State-Machine auf deterministische Weise, d.h. auf vorbestimmte Weise, von einem Zustand in einen anderen Zustand übergeht, wobei die vorbestimmte Weise vom Ausgangszustand und von einer bereitgestellten Eingabe an die Finite-State-Machine abhängen kann. Dass die Finite-State-Machine programmierbar ist, bedeutet dabei, dass die von der Finite-State-Machine durchzuführenden Programmabläufe, welche etwa bedingen, auf welche deterministische Weise die Finite-State-Machine in Abhängigkeit vom Ausgangszustand und von einer bereitgestellten Eingabe in einen anderen Zustand übergeht, durch Programmierung vorgebbar und/oder änderbar sind. Die Ausgestaltung des mindestens einen Messcontrollers als deterministische, programmierbare Finite-State-Machine kann den Vorteil bieten, dass die vom Messcontroller ausführbaren Messfunktionen und/oder Ausgabefunktionen vollständig simulierbar sind.

Die Offenbarung bietet den Vorteil, dass das Steuersystem flexibel, schnell und einfach gestaltet werden kann, da die für den jeweiligen Einsatzzweck geeigneten Komponenten modular zusammengestellt werden können. So können etwa ein oder mehrere Messcontroller in Abhängigkeit von der vorgesehen Funktionalität mit dem Systemcontroller kombiniert werden. Dadurch, dass die Messaufgaben von dem bzw. den jeweiligen Messcontrollern ausgeführt werden, kann der Systemcontroller primär die Systemfunktionen ausführen ohne einen großen Teil seiner Rechenleistung für Messfunktionen bereitstellen zu müssen.

Außerdem bietet die Offenbarung den Vorteil, dass die Messcontroller unabhängig vom Systemcontroller programmiert und optimiert werden können und umgekehrt. So kann es optional möglich sein, dass der Systemcontroller plattformübergreifend in einer Vielzahl verschiedener Steuersysteme zum Einsatz kommt, während je nach Verwendungszweck des Steuersystems ein oder mehrere verschiedene Messcontroller dem Steuersystem hinzugefügt werden. Ferner bietet dies den Vorteil, dass der Systemcontroller kundenspezifisch angepasst bzw. programmiert werden kann, etwa herstellerseitig oder kundenseitig, während die Messcontroller für die hardwarenahen Aufgaben der Messwerterfassung etc. in einer durch den Kunden nicht veränderbaren Weise bereitgestellt werden können.

Auch bietet die Offenbarung den Vorteil, dass die Messcontroller und der Systemcontroller jeweils als in sich abgeschlossene Systeme bereitgestellt werden können und entsprechend einer Verifikation des Steuersystems hinsichtlich der funktionalen Sicherheit vereinfacht werden können. Somit kann insbesondere eine klare Trennung des Systembusses vom Messbus mittels der Busschnittstelle erfolgen, und entsprechend eine für die funktionale Sicherheit vorteilhafte Trennung der hardwarenahen Messignalerfassung, Messsignalelaborierung und Steuerung einerseits, und die durch den Systemcontroller ausgeführten höheren Systemfunktionen andererseits, erreicht werden.

Der Messcontroller bzw. optional die mehreren Messcontroller können jeweils einen oder mehrere RISC-Prozessoren aufweisen. Der bzw. die RISC-Prozessoren können dabei die einzige arithmetisch-logische Einheit (engl.: arithmetic-logic unit, ALU) des Messcontrollers darstellen bzw. bei mehreren RISC-Prozessoren können diese die einzigen ALUs des Messcontrollers darstellen. "RISC" steht dabei für den englischen Begriff "Reduced Instruction Set Computer" und bedeutet, dass der RISC-Prozessor einen reduzierten oder gar minimierten Befehlssatz aufweisen kann im Vergleich zu einem als Mikrocontroller ausgebildeten Systemprozessor. Aufgrund des reduzierten oder gar minimierten Befehlssatzes und einer geringen logischen Tiefe wird die Anzahl der möglichen Alternativen reduziert, welche der RISC-Prozessor beim Ausführen einer Funktion zu prüfen hat, und entsprechend die dafür erforderliche Zeit verringert. Entsprechend kann ein RISC-Prozessor den Vorteil bieten, eine hohe Rechenleistung in kurzer Zeit zu erbringen. Außerdem kann der RISC-Prozessor einen geringeren Energieverbrauch aufweisen als ein Mikrocontroller mit größerer logischer Tiefe und ausführlicherem Befehlssatz als der RISC-Prozessor. Angesichts der geringen Komplexität kann der Messcontroller in Abgrenzung zu einem Mikrocontroller allgemein als "Nanocontroller" bezeichnet werden.

Herkömmlicherweise werden RISC-Prozessoren verwendet, um entweder besonders schnelle Prozessoren zu erhalten, oder um Prozessoren mit einer besonders niedrigen Stromaufnahme zu erhalten. Darüber hinaus werden herkömmlicherweise in einem Steuersystem keine RISC-Prozessoren eingesetzt, sondern zugunsten der Einsparung von Hardwarekomponenten sowohl die Systemfunktionen als auch die Messfunktionen vom Systemcontroller durchgeführt, welcher dazu etwa als Mikrocontroller ausgestaltet sein kann. Offenbarungsgemäß können hingegen RISC-Prozessoren als Messcontroller verwendet werden und in einen Messbus integriert werden, um kleine und kompakte Funktionen im Zusammenhang mit Messdaten und der Ausgabe von Steuer- und Regelsignalen auszuführen. Dies bietet eine große Flexibilität für einen modularen Aufbau eines Messystems und kann eine modulbasierte Absicherung hinsichtlich der funktionalen Sicherheit bieten.

Der Messcontroller wird mittels eines vorgegebenen Programmcodes betrieben und der Messcontroller weist einen ROM-Speicher auf, wobei der vorgegebene Programmcode in dem ROM-Speicher bereitgestellt wird.

Optional kann der ROM-Speicher in verdrahteter Form vorliegen.

Dies kann den Vorteil bieten, dass der im ROM-Speicher bereitgestellte Programmcode nicht manipulierbar bzw. änderbar ist, und somit eine Änderung der Funktionalität und des Programmcodes nur im Rahmen einer Hardwaremodifikation ermöglicht werden kann. Dies kann den Vorteil bieten, dass ein hohes Maß an Absicherung für die funktionale Sicherheit erreicht werden kann und insbesondere versehentliche oder unautorisierte Änderungen am für den Messcontroller bereitgestellten Programmcode durch Unbefugte unterbunden oder erschwert werden können.

Der Messcontroller ist als Finite-State-Machine ausgebildet sodass, die vom Messcontroller ausführbaren Messfunktionen und/oder Ausgabefunktionen vollständig simulierbar sind. Dies kann den Vorteil bieten, dass der bzw. die Messcontroller im Rahmen der funktionalen Sicherheit jeweils als Finite-State-Machines behandelt werden können, insbesondere wenn der vorgegebene Programmcode in einem ROM-Speicher bereitgestellt wird, und die Funktionalität des Messcontrollers vollständig simuliert werden kann.

Entsprechend kann im Rahmen der funktionalen Sicherheit der Aufwand für das Testen und/oder Verifzieren der Funktionalität des Messcontrollers reduziert oder gar minimiert werden. Darüber hinaus kann dies den Vorteil bieten, dass optional die Funktionalität des Messcontrollers vollständig in einer Simulation abbildbar sein kann, wodurch der Testaufwand und/oder Verifikationsaufwand weiter reduziert werden kann. Somit kann ein Messcontroller in Form einer Finite-State-Machine vollständig durchsimuliert werden und mittels regelbasierender Verifikation auf die Einhaltung von Sicherheitsregeln untersucht werden. Dies bietet somit erhebliche Vorteile gegenüber komplexeren Prozessoren, etwa gegenüber Mikrocontrollern, bei denen aufgrund der großen Anzahl an möglichen Zuständen eine Simulation und regelbasierte Verifikation typischerweise nicht möglich ist.

Der Messcontroller kann dazu eingerichtet sein, jede vom Messcontroller ausführbare Messfunktion bzw. Ausgabefunktion jeweils ausgehend von einem Ausgangszustand innerhalb eines vorbestimmten endlichen Zyklus auszuführen und nach Ablauf des vorbestimmten endlichen Zyklus in den Ausgangszustand zurückzukehren. Dies kann hinsichtlich der funktionalen Sicherheit vorteilhaft sein, da ein regelmäßiger Reset, d.h. ein regelmäßiges Zurücksetzen, des Messcontrollers stattfindet und ein Ausfall des Messcontrollers durch lang anhaltendes Hängenbleiben des Betriebs vermieden werden kann. Der vorbestimmte endliche Zyklus kann beispielsweise eine Zeitdauer von 50 µs oder weniger aufweisen, und optional eine Zeitdauer von 20 µs oder weniger aufweisen. Dies ermöglicht es, dass die Funktionalität des Messcontrollers spätestens nach Ablauf des endlichen Zyklus wieder zur Verfügung steht.

Der Messcontroller kann optional dazu eingerichtet sein, maximal 32 oder gar nur maximal 16 verschiedene Befehle auszuführen. Dies ermöglicht eine besonders effiziente Verwirklichung des Messcontrollers unter Verwendung eines RISC-Prozessors, welche auch eine besonders effiziente Verifikation der funktionalen Sicherheit erlaubt.

Der Messcontroller kann ferner einen RAM-Speicher aufweisen und dazu eingerichtet sein, bei Ausführung einer Messfunktion erstellte Ausgabedaten im RAM-Speicher abzuspeichern. Der RAM-Speicher kann optional lediglich zum Abspeichern und insbesondere Zwischenspeichern von Messdaten bzw. Ausgabedaten dienen, welche über die Busschnittstelle an den Systemcontroller übergeben werden sollen. Somit kann insbesondere der RAM-Speicher einen Teil einer Schnittstelle vom Messbus zum Systembus darstellen und eine geeignete Plattform für den Datenaustausch zwischen Messbus und Systembus darstellen. Entsprechend kann das Steuersystem dazu eingerichtet sein, dem Systemcontroller mittels der Busschnittstelle ein Zugreifen auf den RAM-Speicher des Messcontrollers ein Auslesen der Ausgabedaten aus dem RAM-Speicher des Messcontrollers zu ermöglichen. Darüber hinaus kann auch der Systemcontroller einen RAM-Speicher aufweisen, wobei das Steuersystem dazu eingerichtet sein kann, die Ausgabedaten über die Busschnittstelle im RAM-Speicher des Systemcontrollers zu speichern.

Optional kann der vorgegebene Programmcode in einem RAM-Speicher bereitgestellt werden und der Messcontroller in einem Testbetrieb mittels des im RAM-Speicher gespeicherten vorgegebenen Programmcodes betreibbar sein. Beispielsweise kann der RAM-Speicher als Flash-Speicher im Messcontroller ausgebildet sein. Dies bietet die Möglichkeit, im Testbetrieb den vorgegebenen Programmcode in veränderlicher Form bereitzustellen, um etwa Anpassungen und/oder Änderungen am vorgegebenen Programmcode im Testbetrieb zu testen, ohne dass bei jeder Änderung eine Bereitstellung eines neuen ROM-Speichers erforderlich ist. Für den Funktionsbetrieb, d.h. den beabsichtigten Betrieb bei regulärer Verwendung des Steuersystems, kann es jedoch erforderlich sein, dass der vorgegebene Programmcode in einem ROM-Speicher bereitgestellt wird und der Messcontroller im Funktionsbetrieb ausschließlich mittels des im ROM-Speicher gespeicherten vorgegebenen Programmcodes betreibbar ist. Dies kann eine unerwünschte Manipulation des vorgegebenen Programmcodes verhindern oder erschweren.

Die vom Messcontroller ausführbaren Messfunktionen und/oder Ausgabefunktionen können optional derartige Applikationen umfassen, welche im Rahmen einer funktionalen Sicherheit sicherheitsrelevant sind. Dies ermöglicht eine separate Verifikation des Messcontrollers und der von diesem ausgeführten Applikationen, ohne notwendigerweise komplexere Komponenten, wie etwa einen als Mikrocontroller ausgebildeten Systemcontroller, einbeziehen zu müssen.

Das Steuersystem kann dazu eingerichtet sein, einen Zugriff des Systemcontrollers auf den Messcontroller während der Ausführung einer Messfunktion und/oder Ausgabefunktion durch den Messcontroller zu unterbinden. Dies bietet die Möglichkeit, Störungen und/oder andere Einflüsse, welche den Betrieb des Messcontrollers beim Ausführen einer Messfunktion und/oder Ausgabefunktion beeinflussen können, zu vermeiden, und entsprechend der funktionalen Sicherheit zu erhöhen. Insbesondere kann auf diese Weise eine unerwünschte Manipulation der Funktionalität des Messcontrollers durch ein Einwirken des Systemcontrollers vermieden werden.

Das Steuersystem kann dazu eingerichtet sein, ein Taktsignal bereitzustellen und den Systemcontroller und den mindestens einen Messcontroller mit dem Taktsignals zu synchronisieren. Dies kann den Vorteil bieten, dass der Systemcontroller und der mindestens eine Messcontroller in derselben Clock-Domäne betrieben werden können. Dies kann wiederum den Vorteil bieten, dass eine Synchronisation des Betriebs des Systemcontrollers und des Betriebs des mindestens einen Messcontrollers erzielt werden kann. Dies kann wiederum den Vorteil bieten, dass eine zeitliche Anpassung und/oder Zuordnung von Arbeitsabläufen und/oder Arbeitsergebnissen des Systemcontrollers und des zumidnest einen Messcontrollers erleichtert werden kann. Das Taktsignal kann optional durch einen Taktgeber des Steuersystems bereitgestellt werden.

Das Steuersystem kann derart eingerichtet sein, dass der mindestens eine Messcontroller unabhängig vom Systemcontroller betreibbar ist und/oder der Systemcontroller unabhängig vom mindestens einen Messcontroller betreibbar ist. Dies kann den Vorteil bieten, dass etwaige unerwünschte Einwirkungen des Systemcontrollers auf den Betrieb des Messcontrollers oder umgekehrt reduziert oder vermieden werden können. Zudem kann dies den Vorteil bieten, dass die Messcontroller separat vom Systemcontroller als abgeschlossene Elemente bzw. Systeme ausgebildet werden können und optional vollständig simulierbar ausgestaltet werden können, ohne dass deren Betrieb zwingend von Funktionen des Systemcontrollers abhängen muss.

Der Systemcontroller, der mindestens eine Messcontroller und die Busschnittstelle können optional in einen integrierten Schaltkreis integriert sein. Optional können alle Komponenten des Steuersystems in den integrierten Schaltkreis integriert sein. Dies kann den Vorteil bieten, das Steuersystem in Form eines Systems-on-a-Chip bereitzustellen. Dies kann den Vorteil bieten, dass das Steuersystem als ein einzelnes Bauteil bereitgestellt werden kann und optional bei Bedarf auf einer Platine und/oder in anderen elektrischen Systemen als Einheit verbaut werden kann.

Das Steuersystem kann ferner einen RAM-Speicher aufweisen, wobei das Steuersystem dazu eingerichtet sein kann, mittels des mindestens einen Messcontrollers bei Ausführung einer Messfunktion erstellte Ausgabedaten in dem RAM-Speicher abzuspeichern und mittels des Systemcontrollers auf den RAM-Speicher zuzugreifen und die Ausgabedaten aus dem RAM-Speicher auszulesen. Der RAM-Speicher kann dabei zusammen mit anderen Komponenten des Steuersystems in einen integrierten Schaltkreis integriert sein. Der RAM-Speicher kann dabei eine Teil des Systemcontrollers bilden, oder einen Teil eines Messcontrollers bilden oder separat vom Systemcontroller und von dem mindestens einen Messcontroller ausgebildet sein.

Der integrierte Schaltkreis kann derart ausgebildet sein, dass der Messcontroller als deterministische, programmierbare Finite-State-Machine ausgebildet ist und derart eingerichtet ist, dass die vom Messcontroller ausführbaren Messfunktionen und/oder Ausgabefunktionen vollständig simulierbar sind.

Der integrierte Schaltkreis kann ferner einen RAM-Speicher aufweisen und dazu eingerichtet sein, mittels des mindestens einen Messcontrollers bei Ausführung einer Messfunktion erstellte Ausgabedaten in dem RAM-Speicher abzuspeichern und mittels des Systemcontrollers auf den RAM-Speicher zuzugreifen und die Ausgabedaten aus dem RAM-Speicher auszulesen. Der RAM-Speicher kann optional separat vom Systemcontroller und separat von dem mindestens einen Messcontroller ausgebildet sein.

Der integrierter Schaltkreis kann ferner einen Taktgeber zur Bereitstellung eines Taktsignals aufweisen, wobei der integrierte Schaltkreis dazu eingerichtet sein kann, den Systemcontroller und den mindestens einen Messcontroller mittels des Taktsignals zu synchronisieren. Dies kann den Vorteil bieten, dass der Systemcontroller und der mindestens eine Messcontroller in derselben Clock-Domäne betrieben werden können. Dies kann wiederum den Vorteil bieten, dass eine Synchronisation des Betriebs des Systemcontrollers und des Betriebs des mindestens einen Messcontrollers erzielt werden kann. Dies kann wiederum den Vorteil bieten, dass eine zeitliche Anpassung und/oder Zuordnung von Arbeitsabläufen und/oder Arbeitsergebnissen des Systemcontrollers und des zumindest einen Messcontrollers erleichtert werden kann.

Der integrierte Schaltkreis kann derart eingerichtet sein, dass der mindestens eine Messcontroller unabhängig vom Systemcontroller betreibbar ist und/oder der Systemcontroller unabhängig vom mindestens einen Messcontroller betreibbar ist. Dies kann den Vorteil bieten, dass etwaige unerwünschte Einwirkungen des Systemcontrollers auf den Betrieb des Messcontrollers oder umgekehrt reduziert oder vermieden werden können. Zudem kann dies den Vorteil bieten, dass die Messcontroller separat vom Systemcontroller als abgeschlossene Elemente bzw. Systeme ausgebildet werden können und optional vollständig simulierbar ausgestaltet werden können, ohne dass deren Betrieb zwingend von Funktionen des Systemcontrollers abhängen muss.

Sämtliche das Steuersystem betreffende Offenbarungen ist auch für den integrierten Schaltkreis und das Verfahren als offenbart anzusehen und umgekehrt.

Ferner wird ein Steuergerät für ein Kraftfahrzeug bereitgestellt. Das Steuergerät kann ein offenbarungsgemäßes Steuersystem umfassen. Die für das Steuersystem offenbarten Merkmale sind auch als für das Steuergerät offenbart anzusehen.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst.

Weitere Einzelheiten und Vorteile sollen nun anhand der folgenden Beispiele und optionalen Ausführungsformen mit Bezug auf die Figuren näher erläutert werden.

Es zeigen:
- Fig. 1: eine schematische Darstellung eines Steuersystems gemäß einer ersten optionalen Ausführungsform;
- Fig. 2:: eine schematische Darstellung eines Messcontrollers gemäß einer optionalen Ausführungsform;
- Fig. 3:: eine schematische Darstellung eines Steuersystems gemäß einer weiteren optionalen Ausführungsform;
- Fig. 4:: ein Steuergerät gemäß einer optionalen Ausführungsform;
- Fig. 5:: eine Illustration eines Verfahrens zur Bereitstellung eines Steuer- und/oder Regelsignals; und
- Fig. 6: einen integrierten Schaltkreis gemäß einer optionalen Ausführungsform.

In den folgenden Figuren werden gleiche oder ähnliche Elemente in den verschiedenen Ausführungsformen der Einfachheit halber mit gleichen Bezugszeichen bezeichnet.

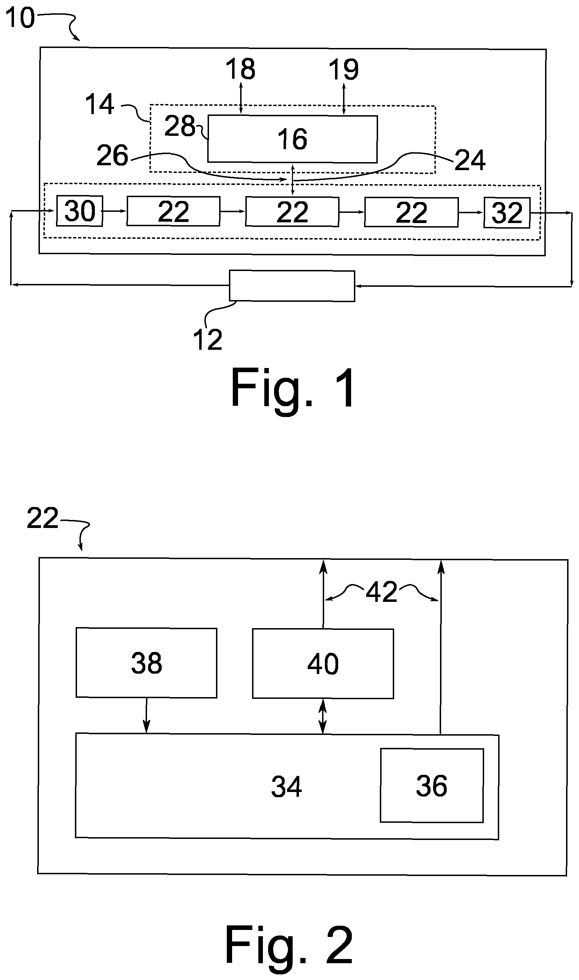

Figur 1 zeigt in einer schematischen Darstellung ein Steuersystem 10 gemäß einer optionalen Ausführungsform, welches dazu eingerichtet ist, Steuer- und/oder Regelsignale zur Steuerung einer Regelstrecke 12 bereitzustellen. Das Steuersystem 10 umfasst einen Systembus 14 mit einem Systemcontroller 16, wobei der Systemcontroller 16 dazu eingerichtet ist, Systemfunktionen 18 des Steuersystems 10 auszuführen. Das Steuersystem 10 ist dadurch gekennzeichnet, dass das Steuersystem 10 ferner einen Messbus 20 mit mindestens einem Messcontroller 22 umfasst, wobei der mindestens eine Messcontroller 22 dazu eingerichtet ist, Messfunktionen zur Erfassung und/oder Aufbereitung von Messdaten und/oder Ausgabefunktionen zur Anpassung und/oder Ausgabe von Steuer- und/oder Regelsignalen auszuführen. Gemäß der gezeigten Ausführungsform weist das Steuersystem 10 im Messbus 20 drei Messcontroller 22 auf. Außerdem weist das Steuersystem 10 eine Busschnittstelle 24 auf, welche dazu eingerichtet ist, eine Kommunikationsverbindung 26 zwischen dem Systembus 14 und dem Messbus 20 bereitzustellen.

Der Systemcontroller 16 kann dabei einen Mikrocontroller 28 aufweisen oder als solcher ausgebildet sein. Der Systemcontroller kann ferner dazu eingerichtet sein, eine Kommunikation 19 anderer Komponenten, welche nicht zum Messsystem 10 gehören, mit dem Messsystem 10 zu ermöglichen.

Bei der Regelstrecke 12 kann es sich um ein analoges System handeln. Entsprechend kann das Regelsystem ferner einen Analog-Digital-Wandler (ADC) 30 am Eingang des Messbusses 20, sowie einen Digital-Analog-Wandler (DAC) 32 am Ausgang des Messbusses 20 aufweisen. Dabei kann das Steuersystem 10 dazu eingerichtet sein, dass der direkt nach dem ADC angeordnete Messcontroller 22 exklusiven Zugriff auf die Ausgabe des ADCs 30 hat und/oder dass der direkt vor dem DAC 32 angeordnete Messcontroller 22 exklusiven Zugriff auf die Eingabe von Daten in den DAC 32 hat.

Figur 2 zeigt in einer schematischen Darstellung einen Messcontroller 22 gemäß einer optionalen Ausführungsform. Der Messcontroller 22 weist eine arithmetisch-logische Einheit (ALU) 34 auf, welche in der gezeigten Ausführungsform als RISC-Prozessor 36 ausgebildet ist. Der RISC-Prozessor 36 stellt dabei die einzige ALU 34 des Messcontrollers 22 dar. Ferner kann der Messcontroller 22 einen ROM-Speicher 38 und einen RAM-Speicher 40 aufweisen, welche mit der ALU 34 verbunden sind. Die ALU 34 und somit der RISC-Prozessor 36 und der Messcontroller 22 können dabei mittels eines vorgegebenen Programmcodes betreibbarsein, wobei der vorgegebene Programmcode in dem ROM-Speicher 38 bereitgestellt wird. Mit anderen Worten kann die ALU 34 ausschließlich mit dem im ROM-Speicher 38 bereitgestellten, vorgegebenen Programmcode betrieben werden. Durch die Verwendung eines RISC-Prozessors 36 kann die Komplexität des Messcontrollers 22 gering gehalten werden. Angesichts der geringen Komplexität kann der Messcontroller 22 in Abgrenzung zu einem Mikrocontroller 28 allgemein als "Nanocontroller" bezeichnet werden. Zudem kann dadurch erreicht werden, dass der Messcontroller 22 lediglich solche Befehle und Funktionen ausführen kann, welche für die vorgesehene Aufgabe erforderlich sind. Der Messcontroller 22 kann dabei optional als Finite-State-Machine ausgebildet sein. Dies kann den Vorteil bieten, dass die vom Messcontroller 22 ausführbaren Messfunktionen und/oder Ausgabefunktionen vollständig simulierbar sind, wodurch eine Verifikation der Funktion des Messcontrollers 22 hinsichtlich der funktionalen Sicherheit erleichtert wird.

Der Messcontroller 22 kann dazu eingerichtet sein, jede vom Messcontroller 22 ausführbare Messfunktion bzw. Ausgabefunktion jeweils ausgehend von einem Ausgangszustand innerhalb eines vorbestimmten endlichen Zyklus auszuführen und nach Ablauf des vorbestimmten endlichen Zyklus in den Ausgangszustand zurückzukehren. Der vorbestimmte endliche Zyklus kann eine Zeitdauer von 50 µs oder weniger aufweisen. Zudem kann der Messcontroller 22 dazu eingerichtet sein, maximal 32 verschiedene Befehle auszuführen, wodurch eine Verifikation des Messcontrollers 22 hinsichtlich der funktionalen Sicherheit erleichtert werden kann.

Der Messcontroller 22 kann ferner einen RAM-Speicher 40 aufweisen und dazu eingerichtet sein, bei Ausführung einer Messfunktion erstellte Ausgabedaten im RAM-Speicher 40 abzuspeichern. Dabei kann das Steuersystem dazu eingerichtet sein, dem Systemcontroller 16 mittels der Busschnittstelle 24 ein Zugreifen auf den RAM-Speicher 40 des Messcontrollers 22 zu ermöglichen, und auf diese Weise ein Auslesen der Ausgabedaten aus dem RAM-Speicher des Messcontrollers ermöglichen. Darüber hinaus kann der Systemcontroller 16 einen RAM-Speicher aufweisen, wobei das Steuersystem 10 dazu eingerichtet sein kann, die Ausgabedaten über die Busschnittstelle 24 im RAM-Speicher des Systemcontrollers 16 zu speichern. Außerdem kann der Messcontroller 22 Verbindungen 42 zur Busschnittstelle 24 aufweisen.

Optional kann der vorgegebene Programmcode in einem RAM-Speicher 40 bereitgestellt werden, sodass der Messcontroller 22 in einem Testbetrieb mittels des im RAM-Speicher 40 gespeicherten vorgegebenen Programmcodes betreibbar ist. Dies kann vorteilhaft sein, um in einem Testbetrieb geänderte Programmcodes zu testen, ohne bei jeder Änderung einen geänderten ROM-Speicher 38 bereitstellen zu müssen. Darüber hinaus kann jedoch der vorgegebene Programmcode in einem ROM-Speicher 38 bereitgestellt werden, sodass der Messcontroller 22 in einem Funktionsbetrieb ausschließlich mittels des im ROM-Speicher 38 gespeicherten vorgegebenen Programmcodes betreibbar ist. Dies kann hinsichtlich der funktionalen Sicherheit vorteilhaft oder erforderlich sein. Die vom Messcontroller 22 ausführbaren Messfunktionen und/oder Ausgabefunktionen können dabei derartige Applikationen umfassen, welche im Rahmen einer funktionalen Sicherheit sicherheitsrelevant sind. Das Steuersystem 10 kann dazu eingerichtet sein, einen Zugriff des Systemcontrollers 16 auf den Messcontroller 22 während der Ausführung einer Messfunktion und/oder Ausgabefunktion durch den Messcontroller 22 zu unterbinden.

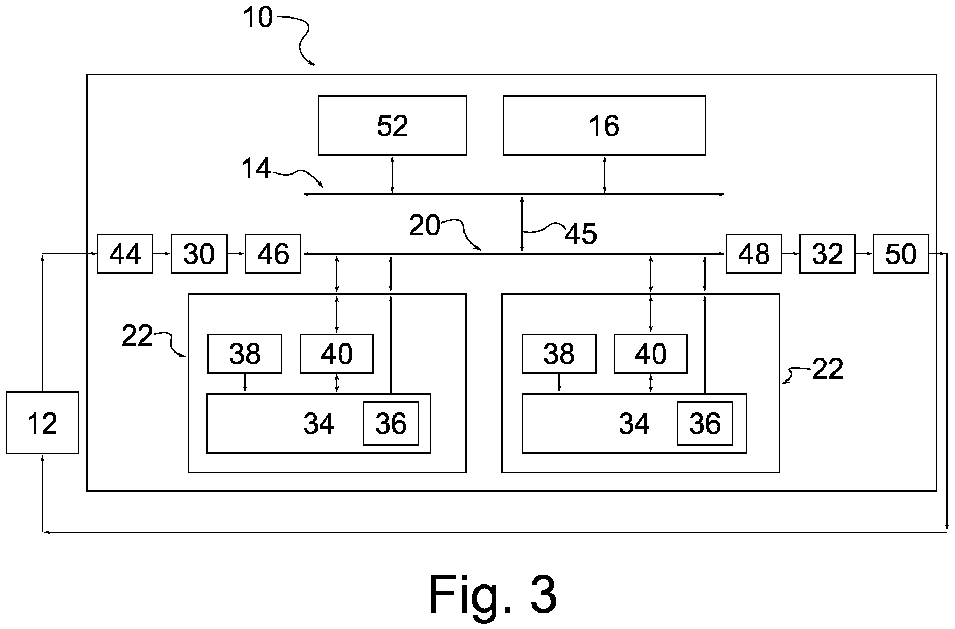

Figur 3 zeigt in einer schematischen Darstellung ein Steuersystem 10 gemäß einer weiteren optionalen Ausführungsform zur Steuerung und/oder Regelung einer Regelstrecke 12 mit einem analogen System. Das Steuersystem 10 weist einen Systembus 14 und einen Messbus 20 auf. Im Messbus 20 befinden sich eingangsseitig ein Frontend 44, ein ADC 30 und eine Steuereinheit 46 für den ADC 30. Des Weiteren befinden sich im Messbus 20 zwei als Nanocontroller ausgebildete Messcontroller 22, wie oben mit Bezug zu Figur 2 im Detail erläutert. Ausgangsseitig befinden sich im Messbus 20 eine Steuereinheit 48 für den DAC 32, der DAC 32 und ein Treiber 50 für die Regelstrecke 12. Im Systembus 14 befinden sich ein als Mikrocontroller 28 ausgebildeter Systemcontroller 16, sowie ein Register 52, welches dem Systemcontroller 16 Daten für einen besonders schnellen Zugriff bereitstellt.

Der Systemcontroller 16 kann dabei einen eigenen ROM-Speicher, RAM-Speicher und/oder einen Flash-Speicher aufweisen. Der Systemcontroller 16 kann dabei über die Busschnittstelle 24 die von einem oder von mehreren Messcontrollern 22 erfassten und optional aufbereiteten und/oder analysierten Messdaten abholen und für die Steuerung des Systems verwenden. Beispielsweise kann einer der Messcontroller 22 für die Erfassung der Messwerte bzw. Messdaten zuständig sein, während der andere Messcontroller 22 für die Elaboration der Messwerte bzw. Messdaten und die Steuerung des DACs zuständig ist. Dadurch ist der Systemcontroller 16 von den Komponenten des Messbusses nicht nur entwicklungsseitig sondern auch busmäßig entkoppelt. Die Messcontroller 22 können dabei gleichartig oder unterschiedlich voneinander ausgebildet sein und an ihre jeweilige Funktion bzw. Aufgabe angepasst sein. So können etwa verschiedene Messcontroller für die Erfassung von Messdaten (Data-Acquisition), die Elaboration und die Steuerung bereitgestellt werden. Außerdem kann dies den Vorteil bieten, dass das Messystem, d.h. die Komponenten des Messbusses im Steuersystem, programmierbar ausgestaltet sein kann bei gleichem Frontend. Beispielsweise kann eine Reprogrammierung durch einen Austausch der ROM-Speicher und eine damit einhergehende Anpassung des vorbestimmten Programmcodes der Messcontroller erfolgen.

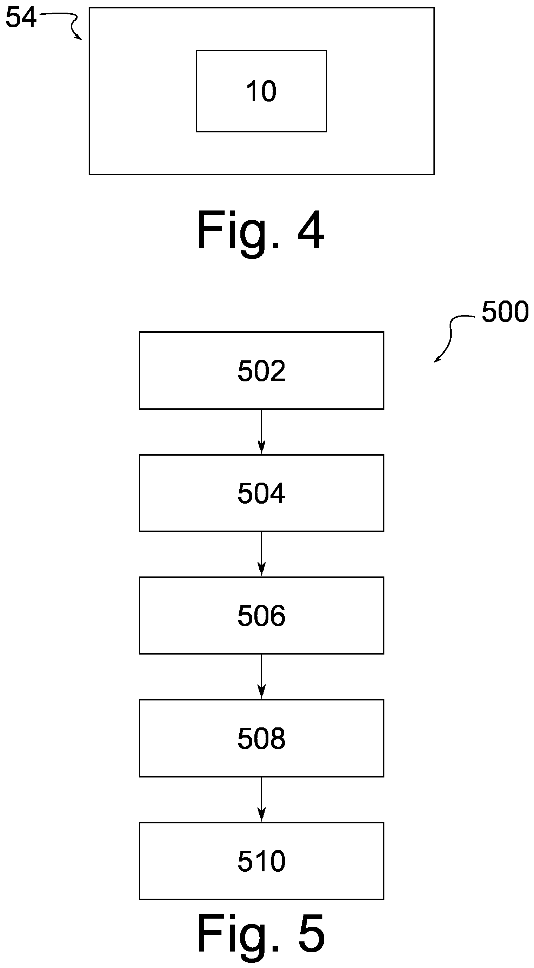

Figur 4 zeigt in einer schematischen Darstellung ein Steuergerät 54 gemäß einer optionalen Ausführungsform für ein Kraftfahrzeug. Das Steuergerät 54 umfasst dabei ein offenbarungsgemäßes Steuersystem 10.

Mit Bezug zu Figur 5 wird im Folgenden ein Verfahren 500 zur Bereitstellung eines Steuer- und/oder Regelsignals erläutert.

Das Verfahren 500 umfasst in einem Schritt 502 ein Bereitstellen eines Systembusses 14 mit einem Systemcontroller 16, wobei der Systemcontroller 16 dazu eingerichtet ist, Systemfunktionen 18 des Steuersystems 10 auszuführen.

In Schritt 504 umfasst das Verfahren 500 ein Bereitstellen eines Messbusses 20 mit mindestens einem Messcontroller 22, wobei der mindestens eine Messcontroller 22 dazu eingerichtet ist, Messfunktionen zur Erfassung und/oder Aufbereitung von Messdaten auszuführen.

In Schritt 506 umfasst das Verfahren 500 ein Senden eines Befehls zur Ausführung einer Messfunktion vom Systemcontroller 16 zum Messcontroller 22 über eine Busschnittstelle 24, welche eine Kommunikationsverbindung 26 zwischen dem Systembus 14 und dem Messbus 20 bereitstellt.

In Schritt 508 umfasst das Verfahren 500 ein Ausführen der Messfunktion durch den Messcontroller 22 und ein Unterbinden eines Zugriffs des Systemcontrollers 16 auf den Messcontroller 22 während des Ausführens der Messfunktion durch den Messcontroller 22.

In Schritt 510 umfasst das Verfahren 500 ein Bereitstellen von Ausgabedaten, welche bei der Ausführung 508 der Messfunktion erstellt wurden, wobei die Ausgabedaten dem Systemcontroller 16 über die Busschnittstelle 24 bereitgestellt werden.

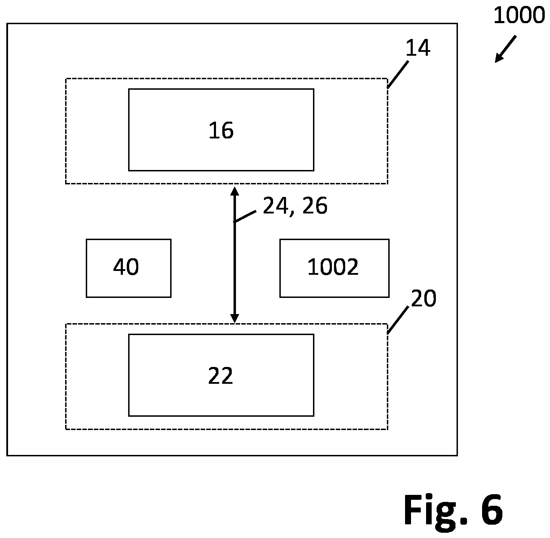

Figur 6 zeigt in einer schematischen Darstellung einen integrierten Schaltkreis 1000 zur Bereitstellung eines Steuersystems 10 zur Bereitstellung von Steuer- und/oder Regelsignalen gemäß einer optionalen Ausführungsform. Der integrierte Schaltkreis 1000 umfasst einen Systembus 14 mit einem Systemcontroller 16, wobei der Systemcontroller 14 dazu eingerichtet ist, Systemfunktionen 18 (siehe Figur 1) des Steuersystems 10 auszuführen. Der integrierte Schaltkreis 1000 weist ferner einen Messbus 20 mit mindestens einem Messcontroller 22 auf, wobei der mindestens eine Messcontroller 22 dazu eingerichtet ist, Messfunktionen zur Erfassung und/oder Aufbereitung von Messdaten und/oder Ausgabefunktionen zur Anpassung und/oder Ausgabe von Steuer- und/oder Regelsignalen auszuführen. Zudem umfasst der integrierte Schaltkreis 1000 eine Busschnittstelle 24, welche dazu eingerichtet ist, eine Kommunikationsverbindung 26 zwischen dem Systembus 14 und dem Messbus 20 bereitzustellen.

Der Messcontroller 22 kann als deterministische, programmierbare Finite-State-Machine ausgebildet sein und derart eingerichtet sein, dass die vom Messcontroller 22 ausführbaren Messfunktionen und/oder Ausgabefunktionen vollständig simulierbar sind.

Der integrierte Schaltkreis kann ferner einen RAM-Speicher 40 aufweisen, wobei der integrierte Schaltkreis 1000 dazu eingerichtet sein kann, mittels des mindestens einen Messcontrollers 22 bei Ausführung einer Messfunktion erstellte Ausgabedaten in dem RAM-Speicher 40 abzuspeichern und mittels des Systemcontrollers 16 auf den RAM-Speicher 40 zuzugreifen und die Ausgabedaten aus dem RAM-Speicher 40 auszulesen.

Der integrierte Schaltkreis 1000 kann ferner einen Taktgeber 1002 zur Bereitstellung eines Taktsignals aufweisen, wobei der integrierte Schaltkreis dazu eingerichtet sein kann, den Systemcontroller 16 und den mindestens einen Messcontroller 22 mittels des Taktsignals zu synchronisieren.

Der integrierte Schaltkreis kann derart eingerichtet sein, dass der mindestens eine Messcontroller 22 unabhängig vom Systemcontroller 16 betreibbar ist und/oder der Systemcontroller 16 unabhängig vom mindestens einen Messcontroller 22 betreibbar ist.

### Bezugszeichenliste

- 10: Steuersystem
- 12: Regelstrecke
- 14: Systembus
- 16: Systemcontroller
- 18: Systemfunktionen
- 19: Kommunikation
- 20: Messbus
- 22: Messcontroller
- 24: Busschnittstelle
- 26: Kommunikationsverbindung
- 28: Mikrocontroller
- 30: Analog-Digital-Wandler
- 32: Digital-Analog-Wandler
- 34: arithmetisch-logische Einheit (ALU)
- 36: RISC-Prozessor
- 38: ROM-Speicher
- 40: RAM-Speicher
- 42: Verbindungen zur Busschnittstelle
- 44: Frontend
- 46: Steuereinheit für ADC
- 48: Steuereinheit für DAC
- 50: Treiber
- 52: Register
- 54: Steuergerät

- 500: Verfahren zur Bereitstellung eines Steuer- und/oder Regelsignals
- 502 - 510: Verfahrensschritte

- 1000: integrierter Schaltkreis
- 1002: Taktgeber

## Patentansprüche

1. Steuersystem (10), welches dazu eingerichtet ist, Steuer- und/oder Regelsignale bereitzustellen, das Steuersystem (10) umfassend:
- einen Systembus (14) mit einem Systemcontroller (16), wobei der Systemcontroller (16) dazu eingerichtet ist, Systemfunktionen (18) des Steuersystems (10) auszuführen;
**dadurch gekennzeichnet, dass** das Steuersystem (10) ferner aufweist:
- einen Messbus (20) mit mindestens einem Messcontroller (22), wobei der mindestens eine Messcontroller (22) dazu eingerichtet ist, Messfunktionen zur Erfassung und/oder Aufbereitung von Messdaten und/oder Ausgabefunktionen zur Anpassung und/oder Ausgabe von Steuer- und/oder Regelsignalen auszuführen, wobei der Messcontroller (22) als deterministische, programmierbare Finite-State-Machine ausgebildet ist und derart eingerichtet ist, dass die vom Messcontroller (22) ausführbaren Messfunktionen und/oder Ausgabefunktionen vollständig simulierbar sind, und wobei der Messcontroller (22) mittels eines vorgegebenen Programmcodes betreibbar ist, der Messcontroller (22) einen ROM-Speicher (38) aufweist und der vorgegebene Programmcode in dem ROM-Speicher (38) bereitgestellt wird; und
- eine Busschnittstelle (24), welche dazu eingerichtet ist, eine Kommunikationsverbindung (26) zwischen dem Systembus (14) und dem Messbus (20) bereitzustellen.

2. Steuersystem (10) gemäß Anspruch 1, wobei der Systemcontroller (16) einen Mikrocontroller (28) aufweist oder als solcher ausgebildet ist und/oder wobei der Messcontroller (22) einen RISC-Prozessor (36) aufweist.

3. Steuersystem (10) gemäß einem der vorhergehenden Ansprüche, wobei der Messcontroller (22) dazu eingerichtet ist, jede vom Messcontroller (22) ausführbare Messfunktion bzw. Ausgabefunktion jeweils ausgehend von einem Ausgangszustand innerhalb eines vorbestimmten endlichen Zyklus auszuführen und nach Ablauf des vorbestimmten endlichen Zyklus in den Ausgangszustand zurückzukehren; und wobei der vorbestimmte endliche Zyklus optional eine Zeitdauer von 50 µs oder weniger aufweist.

4. Steuersystem (10) gemäß einem der vorhergehenden Ansprüche, wobei der Messcontroller (22) dazu eingerichtet ist, maximal 32 verschiedene Befehle auszuführen.

5. Steuersystem (10) gemäß einem der vorhergehenden Ansprüche, wobei der Messcontroller (22) ferner einen RAM-Speicher (40) aufweist und dazu eingerichtet ist, bei Ausführung einer Messfunktion erstellte Ausgabedaten in dem RAM-Speicher (40) abzuspeichern; und wobei das Steuersystem (10) optional dazu eingerichtet ist, dem Systemcontroller (16) mittels der Busschnittstelle (24) ein Zugreifen auf den RAM-Speicher (40) des Messcontrollers (22) und ein Auslesen der Ausgabedaten aus dem RAM-Speicher (40) des Messcontrollers (22) zu ermöglichen.

6. Steuersystem (10) gemäß Anspruch 5, wobei der Systemcontroller (16) einen RAM-Speicher aufweist, und wobei das Steuersystem (10) dazu eingerichtet ist, die Ausgabedaten über die Busschnittstelle (24) in den RAM-Speicher des Systemcontrollers (16) zu speichern.

7. Steuersystem (10) gemäß einem der vorhergehenden Ansprüche, wobei
- der vorgegebene Programmcode zusätzlich in einem RAM-Speicher (40) bereitgestellt wird und der Messcontroller (22) in einem Testbetrieb mittels des im RAM-Speicher (40) gespeicherten vorgegebenen Programmcodes betreibbar ist; und
- der Messcontroller (22) in einem Funktionsbetrieb ausschließlich mittels des im ROM-Speicher (38) gespeicherten vorgegebenen Programmcodes betreibbar ist.

8. Steuersystem (10) gemäß einem der vorhergehenden Ansprüche, wobei die vom Messcontroller (22) ausführbaren Messfunktionen und/oder Ausgabefunktionen derartige Applikationen umfassen, welche im Rahmen einer funktionalen Sicherheit sicherheitsrelevant sind.

9. Steuersystem (10) gemäß einem der vorhergehenden Ansprüche, wobei das Steuersystem (10) dazu eingerichtet ist, einen Zugriff des Systemcontrollers (16) auf den Messcontroller (22) während der Ausführung einer Messfunktion und/oder Ausgabefunktion durch den Messcontroller (22) zu unterbinden.

10. Steuersystem (10) gemäß einem der vorhergehenden Ansprüche, wobei das Steuersystem (10) dazu eingerichtet ist, ein Taktsignal bereitzustellen und den Systemcontroller (16) und den mindestens einen Messcontroller (22) mit dem Taktsignals zu synchronisieren.

11. Steuersystem (10) gemäß einem der vorhergehenden Ansprüche, wobei das Steuersystem derart eingerichtet ist, dass der mindestens eine Messcontroller (22) unabhängig vom Systemcontroller (16) betreibbar ist und/oder der Systemcontroller (16) unabhängig vom mindestens einen Messcontroller (22) betreibbar ist.

12. Steuersystem (10) gemäß einem der vorhergehenden Ansprüche, wobei der Systemcontroller (16), der mindestens eine Messcontroller (22) und die Busschnittstelle (24) in einen integrierten Schaltkreis integriert sind.

13. Steuersystem (10) gemäß einem der vorhergehenden Ansprüche, ferner aufweisend einen RAM-Speicher (40), wobei das Steuersystem dazu eingerichtet ist, mittels des mindestens einen Messcontrollers (22) bei Ausführung einer Messfunktion erstellte Ausgabedaten in dem RAM-Speicher (40) abzuspeichern und mittels des Systemcontrollers (16) auf den RAM-Speicher (40) zuzugreifen und die Ausgabedaten aus dem RAM-Speicher (40) auszulesen.

14. Steuergerät (54) für ein Kraftfahrzeug, das Steuergerät (54) umfassend ein Steuersystem (10) gemäß einem der Ansprüche 1 bis 13.

15. Verfahren (500) zur Bereitstellung eines Steuer- und/oder Regelsignals, das Verfahren umfassend:
- Bereitstellen (502) eines Systembusses (14) mit einem Systemcontroller (16), wobei der Systemcontroller (16) dazu eingerichtet ist, Systemfunktionen (18) des Steuersystems (10) auszuführen;
- Bereitstellen (504) eines Messbusses (20) mit mindestens einem Messcontroller (22), wobei der mindestens eine Messcontroller (22) dazu eingerichtet ist, Messfunktionen zur Erfassung und/oder Aufbereitung von Messdaten auszuführen, wobei der Messcontroller (22) als deterministische, programmierbare Finite-State-Machine ausgebildet ist und derart eingerichtet ist, dass die vom Messcontroller (22) ausführbaren Messfunktionen und/oder Ausgabefunktionen vollständig simulierbar sind, und wobei der Messcontroller (22) mittels eines vorgegebenen Programmcodes betreibbar ist, der Messcontroller (22) einen ROM-Speicher (38) aufweist und der vorgegebene Programmcode in dem ROM-Speicher (38) bereitgestellt wird;
- Senden (506) eines Befehls zur Ausführung einer Messfunktion vom Systemcontroller (16) zum Messcontroller (22) über eine Busschnittstelle (24), welche eine Kommunikationsverbindung (26) zwischen dem Systembus (14) und dem Messbus (20) bereitstellt;
- Ausführen (508) der Messfunktion durch den Messcontroller (22) und Unterbinden eines Zugriffs des Systemcontrollers (16) auf den Messcontroller (22) während des Ausführens der Messfunktion durch den Messcontroller (22); und
- Bereitstellen (510) von Ausgabedaten, welche bei der Ausführung der Messfunktion erstellt wurden, wobei die Ausgabedaten dem Systemcontroller (16) über die Busschnittstelle (24) bereitgestellt werden.

## Claims

1. A control system (10) which is configured to provide open- and/or closed-loop control signals, the control system (10) comprising:
- a system bus (14) with a system controller (16), wherein the system controller (16) is configured to execute system functions (18) of the control system (10);
**characterized in that** the control system (10) further has:
- a measurement bus (20) with at least one measuring controller (22), wherein the at least one measuring controller (22) is configured to perform measurement functions for acquiring and/or processing measurement data and/or output functions for adjusting and/or outputting open- and/or closed-loop control signals, wherein the measuring controller (22) is designed as a deterministic, programmable finite-state machine and configured such that the measurement functions and/or output functions executable by the measuring controller (22) are fully simulatable, and wherein the measuring controller (22) can be operated by means of a predetermined program code, the measuring controller (22) has a ROM memory (38) and the predetermined program code is provided in the ROM memory (38); and
- a bus interface (24) which is configured to provide a communication link (26) between the system bus (14) and the measurement bus (20).

2. The control system (10) according to claim 1, wherein the system controller (16) has a microcontroller (28) or is configured as such and/or wherein the measuring controller (22) has a RISC processor (36).

3. The control system (10) according to any one of the preceding claims, wherein the measuring controller (22) is configured to execute each measuring function or output function executable by the measuring controller (22) from an initial state within a predetermined finite cycle and to return to the initial state after the predetermined finite cycle has elapsed; and wherein the predetermined finite cycle optionally has a duration of 50 µs or less.

4. The control system (10) according to any one of the preceding claims, wherein the measuring controller (22) is configured to execute a maximum of 32 different commands.

5. The control system (10) according to any one of the preceding claims, wherein the measuring controller (22) further has a RAM memory (40) and is configured to store output data generated during the execution of a measuring function in the RAM memory (40); and wherein the control system (10) is optionally configured to allow the system controller (16) to access the RAM memory (40) of the measuring controller (22) and to read out the output data from the RAM memory (40) of the measuring controller (22) via the bus interface (24).

6. The control system (10) according to claim 5, wherein the system controller (16) has a RAM memory, and wherein the control system (10) is configured to store the output data via the bus interface (24) in the RAM memory of the system controller (16).

7. The control system (10) according to any one of the preceding claims, wherein
- the predetermined program code is additionally provided in a RAM memory (40) and the measuring controller (22) can be operated in a test mode by means of the predetermined program code stored in the RAM memory (40); and
- the measuring controller (22) can be operated in a functional mode exclusively by means of the predetermined program code stored in the ROM memory (38).

8. The control system (10) according to any one of the preceding claims, wherein the measurement functions and/or output functions executable by the measuring controller (22) include such applications which are safety-relevant within the framework of functional safety.

9. The control system (10) according to any one of the preceding claims, wherein the control system (10) is configured to prevent access by the system controller (16) to the measuring controller (22) during the execution of a measurement function and/or output function by the measuring controller (22).

10. The control system (10) according to any one of the preceding claims, wherein the control system (10) is configured to provide a clock signal and to synchronize the system controller (16) and the at least one measuring controller (22) with the clock signal.

11. The control system (10) according to any one of the preceding claims, wherein the control system is configured such that the at least one measuring controller (22) can be operated independently of the system controller (16) and/or the system controller (16) can be operated independently of the at least one measuring controller (22).

12. The control system (10) according to any one of the preceding claims, wherein the system controller (16), the at least one measuring controller (22) and the bus interface (24) are integrated into an integrated circuit.

13. The control system (10) according to any one of the preceding claims, further comprising a RAM memory (40), wherein the control system is configured to store, by means of the at least one measuring controller (22), output data generated during the execution of a measuring function in the RAM memory (40), and to access the RAM memory (40) by means of the system controller (16) and to read out the output data from the RAM memory (40).

14. A control device (54) for a motor vehicle, the control device (54) comprising a control system (10) according to any one of claims 1 to 13.

15. A method (500) for providing an open- and/or closed loop control signal, the method comprising:
- providing (502) a system bus (14) with a system controller (16), wherein the system controller (16) is configured to execute system functions (18) of the control system (10);
- providing (504) a measurement bus (20) with at least one measuring controller (22), wherein the at least one measuring controller (22) is configured to execute measurement functions for detecting and/or processing measurement data, wherein the measuring controller (22) is configured as a deterministic, programmable finite-state machine and configured such that the measurement functions and/or output functions executable by the measuring controller (22) are fully simulatable, and wherein the measuring controller (22) can be operated by means of a predetermined program code, the measuring controller (22) has a ROM memory (38), and the predetermined program code is provided in the ROM memory (38);
- sending (506) a command to execute a measurement function from the system controller (16) to the measuring controller (22) via a bus interface (24) which provides a communication link (26) between the system bus (14) and the measurement bus (20);
- executing (508) the measurement function by the measuring controller (22) and preventing access by the system controller (16) to the measuring controller (22) while the measurement function is being executed by the measuring controller (22); and
- providing (510) output data generated during the execution of the measurement function, wherein the output data are provided to the system controller (16) via the bus interface (24).

## Revendications

1. Système de commande (10), configuré pour fournir des signaux de commande en boucle ouverte et/ou fermée, le système de commande (10) comprenant :
- un bus système (14) avec un contrôleur système (16), dans lequel le contrôleur système (16) est configuré pour exécuter les fonctions système (18) du système de commande (10) ;
**caractérisé en ce que** le système de commande (10) comprend en outre :
- un bus de mesure (20) avec au moins un contrôleur de mesure (22), dans lequel l'au moins un contrôleur de mesure (22) est configuré pour exécuter des fonctions de mesure permettant l'acquisition et/ou le traitement de données de mesure, et/ou des fonctions de sortie permettant le réglage et/ou la génération de signaux de commande en boucle ouverte et/ou fermée, dans lequel ledit contrôleur de mesure (22) est conçu comme une machine à états finis déterministe et programmable, et configuré de sorte que les fonctions de mesure et/ou de sortie exécutables par le contrôleur de mesure (22) sont entièrement simulables, et dans lequel ledit contrôleur de mesure (22) peut être utilisé au moyen d'un code de programme prédéfini, ledit contrôleur de mesure (22) comporte une mémoire ROM (38) et le code de programme prédéfini est fourni dans la mémoire ROM (38) ; et
- une interface de bus (24), qui est configurée pour fournir une liaison de communication (26) entre le bus système (14) et le bus de mesure (20).

2. Système de commande (10) selon la revendication 1, dans lequel le contrôleur système (16) comporte un microcontrôleur (28) ou est conçu comme tel et/ou dans lequel le contrôleur de mesure (22) comporte un processeur RISC (36).

3. Système de commande (10) selon l'une quelconque des revendications précédentes, dans lequel ledit contrôleur de mesure (22) est configuré pour exécuter chaque fonction de mesure ou fonction de sortie exécutable par le contrôleur de mesure (22) à partir d'un état initial dans un cycle fini prédéterminé et pour revenir à l'état initial après l'écoulement du cycle fini prédéterminé ; et dans lequel le cycle fini prédéterminé a éventuellement une durée inférieure ou égale à 50 µs.

4. Système de commande (10) selon l'une quelconque des revendications précédentes, dans lequel le contrôleur de mesure (22) est configuré pour exécuter un maximum de 32 commandes différentes.

5. Système de commande (10) selon l'une quelconque des revendications précédentes, dans lequel le contrôleur de mesure (22) comporte en outre une mémoire RAM (40) et est configuré pour stocker les données de sortie générées lors de l'exécution d'une fonction de mesure dans la mémoire RAM (40) ; et dans lequel le système de commande (10) est configuré en option pour permettre au contrôleur système (16) d'accéder à la mémoire RAM (40) du contrôleur de mesure (22) et de lire les données de sortie de la mémoire RAM (40) du contrôleur de mesure (22) au moyen de l'interface de bus (24).

6. Système de commande (10) selon la revendication 5, dans lequel le contrôleur système (16) comporte une mémoire RAM, et dans lequel le système de commande (10) est configuré pour stocker les données de sortie dans la mémoire RAM du contrôleur système (16) via l'interface de bus (24).

7. Système de commande (10) selon l'une quelconque des revendications précédentes, dans lequel
- le code de programme prédéfini est en outre fourni dans une mémoire RAM (40) et le contrôleur de mesure (22) peut être utilisé en mode test à l'aide du code de programme prédéfini stocké dans la mémoire RAM (40) ; et
- le contrôleur de mesure (22) peut être utilisé en mode de fonctionnement exclusivement au moyen du code de programme prédéfini stocké dans la mémoire ROM (38).

8. Système de commande (10) selon l'une quelconque des revendications précédentes, dans lequel les fonctions de mesure et/ou les fonctions de sortie exécutables par le contrôleur de mesure (22) comprennent des applications qui sont pertinentes pour la sécurité dans le cadre de la sécurité fonctionnelle.

9. Système de commande (10) selon l'une quelconque des revendications précédentes, dans lequel le système de commande (10) est configuré pour empêcher l'accès par le contrôleur système (16) au contrôleur de mesure (22) pendant l'exécution d'une fonction de mesure et/ou d'une fonction de sortie par le contrôleur de mesure (22).

10. Système de commande (10) selon l'une quelconque des revendications précédentes, dans lequel le système de commande (10) est configuré pour fournir un signal d'horloge et pour synchroniser le contrôleur système (16) et l'au moins un contrôleur de mesure (22) avec le signal d'horloge.

11. Système de commande (10) selon l'une quelconque des revendications précédentes, dans lequel le système de commande est configuré de sorte que l'au moins un contrôleur de mesure (22) peut être utilisé indépendamment du contrôleur système (16) et/ou que le contrôleur système (16) peut être utilisé indépendamment d'au moins un contrôleur de mesure (22).

12. Système de commande (10) selon l'une quelconque des revendications précédentes, dans lequel le contrôleur système (16), l'au moins un contrôleur de mesure (22) et l'interface de bus (24) sont intégrés dans un circuit intégré.

13. Système de commande (10) selon l'une quelconque des revendications précédentes, comportant en outre une mémoire RAM (40), dans lequel le système de commande est configuré pour enregistrer dans la mémoire RAM (40) les données de sortie générées par l'au moins un contrôleur de mesure (22) lors de l'exécution d'une fonction de mesure et pour accéder à la mémoire RAM (40) au moyen du contrôleur système (16) et pour lire les données de sortie à partir de la mémoire RAM (40).

14. Dispositif de commande (54) pour un véhicule automobile, le dispositif de commande (54) comprenant un système de commande (10) selon l'une quelconque des revendications 1 à 13.

15. Procédé (500) de fourniture d'un signal de commande en boucle ouverte et/ou fermée, le procédé comprenant :
- la fourniture (502) d'un bus système (14) avec un contrôleur système (16), dans lequel le contrôleur système (16) est configuré pour exécuter les fonctions système (18) du système de commande (10) ;
- la fourniture (504) d'un bus de mesure (20) avec au moins un contrôleur de mesure (22), dans lequel l'au moins un contrôleur de mesure (22) est configuré pour exécuter des fonctions de mesure permettant l'acquisition et/ou le traitement de données de mesure, dans lequel ledit contrôleur de mesure (22) est conçu comme une machine à états finis déterministe et programmable, et configuré de sorte que les fonctions de mesure et/ou de sortie exécutables par le contrôleur de mesure (22) sont entièrement simulables, et dans lequel ledit contrôleur de mesure (22) peut être utilisé au moyen d'un code de programme prédéfini, ledit contrôleur de mesure (22) comporte une mémoire ROM (38) et le code de programme prédéfini est fourni dans la mémoire ROM (38) ;
- l'envoi (506) au contrôleur de mesure (22) d'une commande permettant d'exécuter une fonction de mesure du contrôleur système (16), via une interface de bus ('24) qui fournit une liaison de communication (26) entre le bus système (14) et le bus de mesure (20) ;
- l'exécution (508) de la fonction de mesure par le contrôleur de mesure (22) et la prévention de l'accès par le contrôleur système (16) au contrôleur de mesure (22) pendant l'exécution de la fonction de mesure par le contrôleur de mesure (22) ; et
- la fourniture (510) des données de sortie générées pendant l'exécution de la fonction de mesure, dans lequel les données de sortie sont fournies au contrôleur système (16) via l'interface de bus (24).
